# EUROPEAN PATENT SPECIFICATION

(11) **EP 1 017 928 B1**
(45) Date of publication and mention of the grant of the patent: **22.01.2003**
(21) Application number: 98943608.4
(22) Date of filing: 18.09.1998
(51) Int. Cl.: F01M 5/00

(54) **BY-PASS VALVES FOR HEAT EXCHANGERS**
BYPASSVENTIL FÜR WÄRMETAUSCHER
VANNES DE DERIVATION POUR ECHANGEURS DE CHALEUR

(30) Priority: 24.09.1997 CA 2216451
(43) Date of publication of application: 12.07.2000
(73) Proprietor: LONG MANUFACTURING LTD., Oakville Ontario L6K 3E4 (CA)
(72) Inventor: SEILER, Thomas, F., Milton, Ontario L9T 2X7 (CA); BETTIO, Dario, Mississauga, Ontario L5N 2M3 (CA); PERIC, Yuri, Oakville, Ontario L6K 3C3 (CA)
(74) Representative: Gleiss, Alf-Olav, Dr.jur. Dipl.-Ing.
(86) International application number: CA9800885
(87) International publication number: WO99015767

(56) References cited:
- EP-A- 0 138 618
- DE-U- 29 619 609
- US-A- 4 027 643
- US-A- 4 190 198
- US-A- 5 746 170

## Description

### TECHNICAL FIELD

This invention relates to heat exchangers, and in particular, to by-pass valves for by-passing a heat exchanger in a heat exchange circuit under conditions where the heat transfer function of the heat exchanger is not required or is only intermittently required.

In certain applications, such as in the automotive industry, heat exchangers are used to cool or heat certain fluids, such as engine oil or transmission fluid or oil. In the case of transmission fluid, for instance, a heat exchanger is used to cool the transmission fluid. The heat exchanger is usually located remote from the transmission and receives hot transmission oil from the transmission through supply tubing, cools it, and delivers it back to the transmission again through return tubing. However, when the transmission is cold, such as at start-up conditions, the transmission oil is very viscous and does not flow easily through the heat exchanger, if at all. In such cases, the transmission can be starved of oil and this may cause damage or at the least erratic performance. Cumulative damage to the transmission can also occur if the quantity of oil returned is adequate, but is overcooled due to low ambient temperatures. In this case, for instance, moisture condensation in the oil (that would otherwise be vaporized at higher temperatures) may accumulate and cause corrosion damage or oil degradation.

In order to overcome the cold flow starvation problem, various solutions have been proposed in the past. One solution is to use a small by-pass conduit acting as a short circuit between the heat exchanger supply line and the return line to the transmission. While this provides for some cold flow and prevents the transmission from being starved of oil, it reduces the heat exchange efficiency when the transmission fluid reaches operating temperature, because some of the transmission fluid does not go through the heat exchanger. The problem is exacerbated by the changing transmission oil viscosity as the oil heats up. In other words, a by-pass channel large enough to give sufficient flow to prevent starvation at cold temperatures produces too much by-pass flow when the oil heats up and becomes less viscous.

In order to overcome the reduced efficiency caused by simple by-pass channels, it has been proposed to put an actual shut-off valve in the by-pass line. When the oil is cold, the by-pass channel is open, and when the oil heats up, the valve in the by-pass line closes to prevent further by-pass. Usually some type of temperature responsive valve element is used, such as a bimetallic strip or some other type of device that expands and contracts or rotates to open and close the by-pass valve when the oil temperature exceeds certain limits.

Examples of the shut-off type of by-pass valves are shown in German Utility Model No. 296 19 609 and U.S. patent No. 4,191,198. These patents show a housing having an inner chamber and first, second and third ports communicating with the inner chamber. One of the ports is a by-pass valve port having a peripheral valve seat and a moveable valve member to engage the valve seat and shut off the bypass flow. A temperature responsive actuator is located in the chamber and is operably connected to the valve member to open and close the valve port.

A difficulty with these prior art by-pass valves is that the temperature responsive actuators expand and contract in relation to the temperatures to which they are exposed, and extreme temperatures can damage the actuators. Means have to be provided to accommodate excess movement of the actuators, yet give a good seal or closure of the by-pass valve ports. If the valve ports close well when the oil gets hot, they usually do not open very well when the oil cools down and it is again necessary to have by-pass flow.

The present invention is an improvement over the above-mentioned by-pass valves in that a return spring is connected directly to the body of the temperature responsive actuator to return the actuator to the cold or by-pass state and yet accommodate excessive movement of the actuator caused by temperature extremes. A separate or independent spring-biased valve member closes and opens the valve port.

### DISCLOSURE OF THE INVENTION

According to one aspect of the invention, there is provided a by-pass valve for a heat exchange circuit having a housing defining a chamber therein and first, second and third main ports communicating with the chamber. The first main port is a by-pass valve port. The valve port has a central axis and a peripheral valve seat. A temperature responsive actuator is located in the chamber and has a reciprocating central shaft disposed along the central axis. The central shaft has a closed end portion for partially closing the valve port and an annular ring is located adjacent to the closed end portion and extends transversely from the shaft to engage the valve seat and completely close the valve port. The improvement comprises a return spring mounted in the housing below the annular ring and being connected to the central shaft to urge the central shaft end portion to retract and open the valve port.

According to another aspect of the invention, there is provided a heat exchanger having an inlet manifold with an inlet opening and an outlet manifold with an outlet opening. A plurality of spaced-apart heat exchange conduits are connected between the inlet and outlet manifolds. A by-pass valve includes a housing defining a chamber therein and first, second and third main ports communicating with the chamber, the first main port being a by-pass valve port. The valve port has a central axis and a peripheral valve seat. Means are provided for connecting the valve port to one of the inlet and outlet openings. Means are provided for connecting the second main port, the chamber and the third main port in series with the other of the inlet and outlet openings. A temperature responsive actuator is located in the chamber and has a reciprocating central shaft disposed along the central axis. The central shaft has a closed end portion for partially closing the valve port and an annular ring located adjacent to the closed end portion and extending transversely from the shaft to engage the valve seat and completely close the valve port. The improvement comprises a return spring mounted in the housing below the annular ring and being connected to the central shaft to urge the central shaft end portion to retract and open the valve port.

### BRIEF DESCRIPTION OF THE DRAWINGS

Preferred embodiments of the invention will now be described by way of example, with reference to the accompanying drawings, in which:
Figure 1 is a perspective, schematic view of a heat exchanger employing a preferred embodiment of a by-pass valve according to the present invention;
Figure 2 is a perspective view similar to Figure 1, but showing another preferred embodiment of a by-pass valve according to the present invention;
Figure 3 is a sectional view taken along lines 3-3 of Figure 1 showing the by-pass valve open;
Figure 4 is a sectional view similar to Figure 3 but showing the by-pass valve closed;
Figure 5 is a sectional view similar to Figure 3, but showing a modification for blocking flow to the heat exchanger;
Figure 6 is a sectional view similar to Figure 5 but showing the by-pass valve closed and the heat exchanger unblocked;
Figure 7 is a perspective view of the removable closure used in the by-pass valve of Figures 5 and 6;
Figure 8 is a sectional view taken along lines 8-8 of Figure 7;
Figure 9 is an elevational view, partly in section, of the valve cartridge or subassembly used in the by-pass valve of Figures 3 and 4;
Figure 10 is an elevational view, partly in section of the valve cartridge or subassembly used in the by-pass valve of Figures 5 and 6;
Figure 11 is an elevational view similar to Figure 3, but taken along lines 11-11 of Figure 2 and showing a three port by-pass valve;
Figure 12 is an elevational view similar to Figure 11 but showing the by-pass valve closed;
Figure 13 is an elevational view similar to Figure 5, but showing a three port by-pass valve; and
Figure 14 is an elevational view similar to Figure 13 but showing the by-pass valve closed.

### BEST MODE FOR CARRYING OUT THE INVENTION

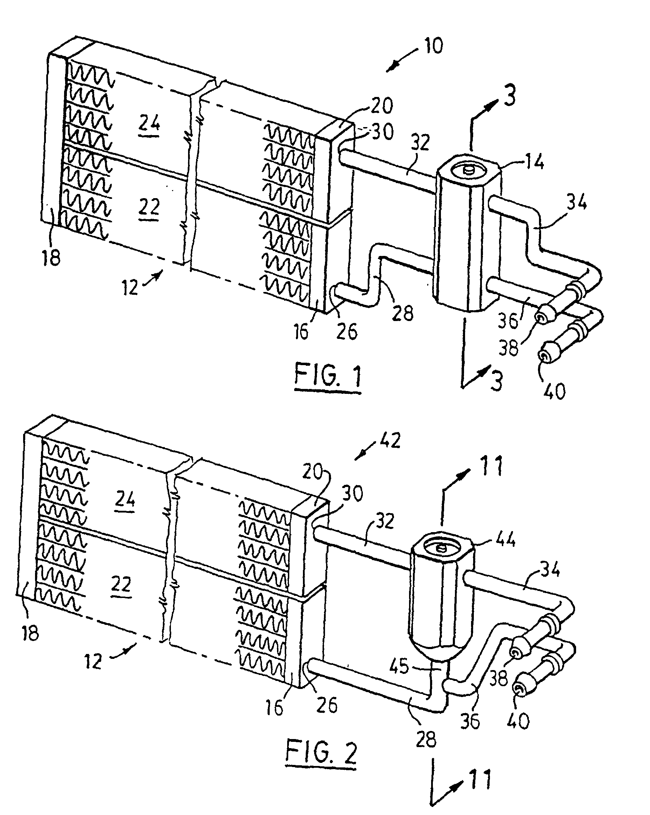

Referring firstly to Figure 1, a heat exchange circuit 10 is disclosed, which includes a heat exchanger 12, and a preferred embodiment of a by-pass valve 14 according to the present invention. Any type of heat exchanger can be used with the present invention. A typical two pass heat exchanger is shown in Figure 1 and has a first manifold 16, which could be an inlet or an outlet manifold, a return manifold 18, and a second manifold 20. A plurality of spaced-apart heat exchange conduits 22, 24 are connected between the manifolds so, for example, if first manifold 16 is an inlet manifold, fluid flows from inlet manifold 16 through conduits 22 into return manifold 18 where it reverses direction and comes back through conduits 24 to second manifold 20, which is now an outlet manifold. The flow direction can be reversed so that second manifold 20 is the inlet manifold and first manifold 16 is the outlet manifold. It will be appreciated, however, that heat exchanger 12 could be straightened out to become a single pass heat exchanger with manifolds 16, 20 located at respective ends of the heat exchanger. In this case, return manifold 18 would not be required.

If first manifold 16 is the inlet manifold, it is formed with an inlet opening 26 and an inlet conduit 28 is connected to communicate with inlet opening 26. If second manifold 20 is the outlet manifold, it is formed with an outlet opening 30, and an outlet conduit 32 is connected to communicate with outlet opening 30. It will be appreciated, however, that if the flow direction is reversed, outlet conduit 32 becomes the inlet conduit and inlet conduit 28 becomes the outlet conduit. Conduits 28, 32 are connected to inlet and outlet ports in by-pass valve 14, as will be described further below. Supply conduits 34, 36 are also connected to ports in by-pass valve 14, as will be described further below. Supply conduits 34, 36 have end fittings 38, 40 for attaching flow lines to conduits 34, 36. Where heat exchanger 12 is used as a transmission oil cooler, end fittings 38, 40 can be hose barbs for attaching rubber hoses between the transmission and heat exchange circuit 10. However, any type of end fittings 38, 49 can be used to suit the type of oil lines running to and from heat exchange circuit 10. By-pass valve 14 is referred to as a four port by-pass valve, because four conduits 28, 32, 34 and 36 are connected to by-pass valve 14.

Figure 2 is similar to Figure 1 and similar reference numerals have been used in Figure 2 and subsequent Figures to indicate components that correspond to those of the embodiment shown in Figure 1. However, the heat exchange circuit 42 of Figure 2 has a by-pass valve 44 which is referred to as a three port by-pass valve, because it has a single conduit 45 coming out of it that communicates with conduits 28 and 36, the purpose of which will be discussed below.

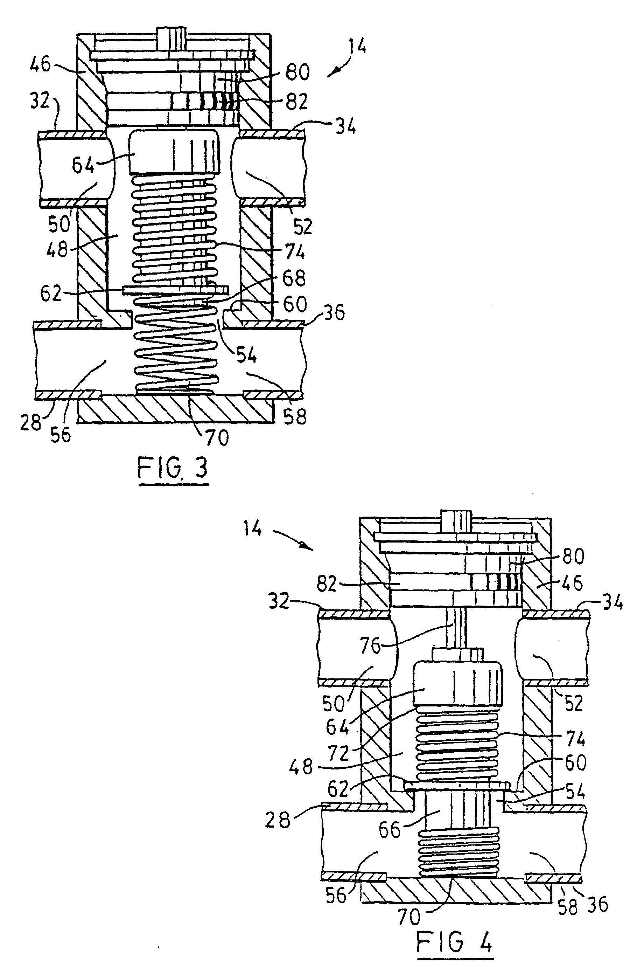

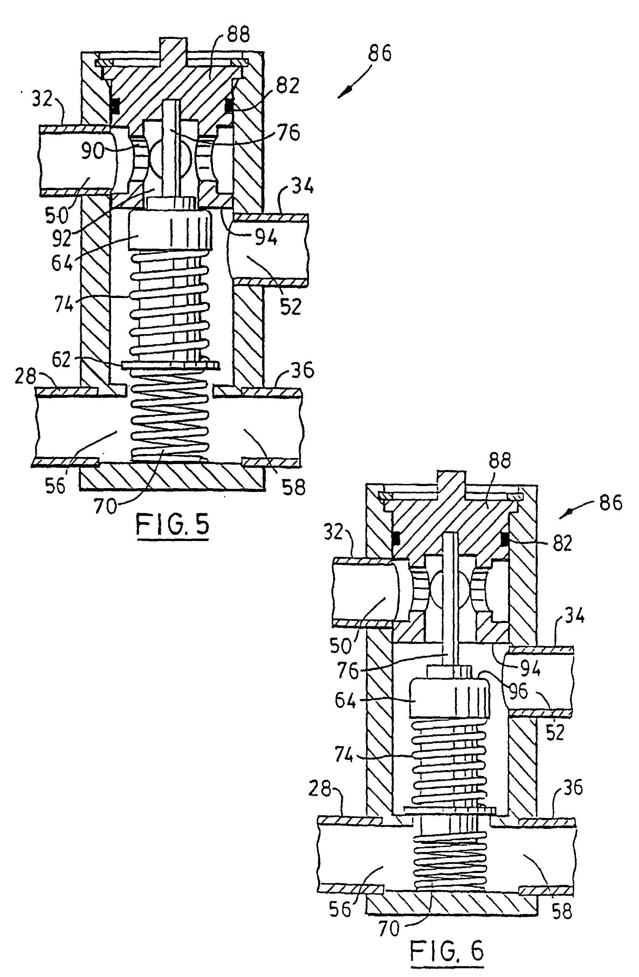

Referring next to Figures 3 and 4, four port by-pass valve 14 is shown and it has a housing 46 defining a chamber 48 therein. Housing 46 has three main ports or openings 50, 52 and 54. One of these main ports, namely main port 54, is referred to as a valve port. Valve port 54 communicates with two lower branch ports 56, 58, and conduits 28, 36 are connected respectively to the branch ports 56, 58.

Valve port 54 has a peripheral valve seat 60 facing chamber 48, and a movable valve member 62 is adapted to engage valve seat 60 to open and close valve port 54.

A temperature responsive actuator 64 is located inside chamber 48 and is operably coupled to valve member 62 to move valve member 62 thereby opening and closing valve port 54. Actuator 64 is sometimes referred to as a thermal motor and it is a piston and cylinder type device wherein the cylinder is filled with a thermal sensitive material, such as wax, that expands and contracts causing the actuator to extend axially upon being heated to a predetermined temperature and to retract upon being cooled below this predetermined temperature. Where by-pass valve 14 is used in conjunction with an automotive transmission oil cooler, this predetermined temperature is such that the oil returning to the transmission from heat exchange circuit 10 is about 80 degrees C.

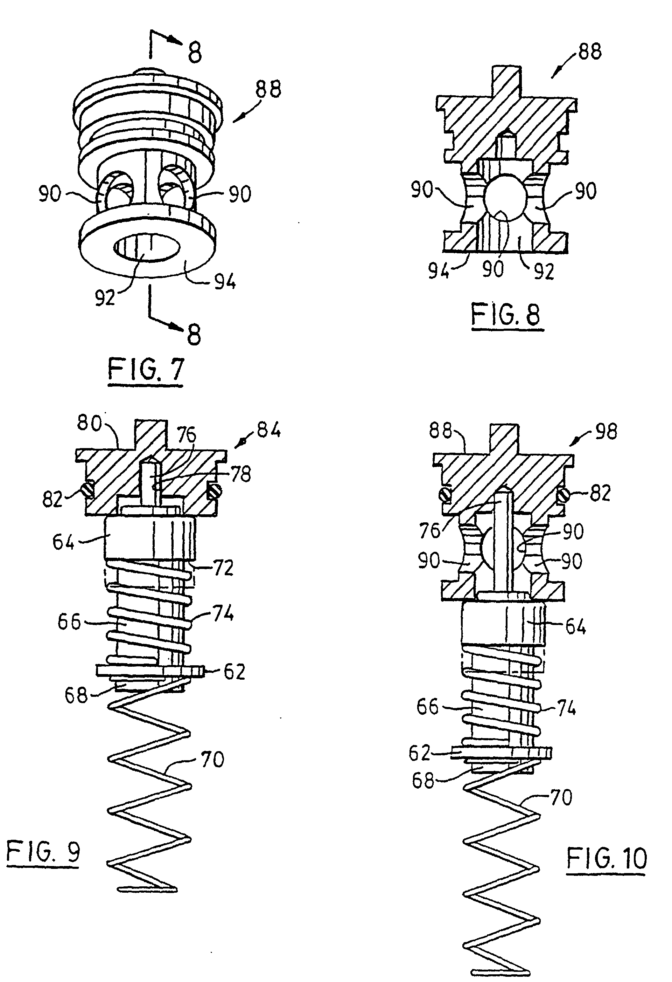

Referring next to Figure 9 in association with Figures 3 and 4, it will be seen that actuator 64 is located along a central axis of chamber 48 and also valve port 54. The cylinder of actuator 64 forms a central shaft 66 disposed along the central axis of valve port 54. Central shaft 66 has a closed end portion 68 that partially closes valve port 54. Valve member 62, which is in the form of a annular ring located adjacent to closed end portion 68 in its normal or at rest position as indicated in Figures 3 and 9, extends transversely from the central shaft 66 to engage valve seat 60 to completely close valve port 54 as indicated in Figure 4. The annular ring 62 and closed end portion 68 form a reciprocating plug which moves along the central axis to open and close valve port 54.

Annular ring or valve member 62 is slidably mounted on central shaft 66. A return spring 70 is attached to closed end portion 68 by being located in a groove (not shown) formed in closed end portion 68. Return spring 70 thus acts as a stop for preventing annular ring 62 from sliding off central shaft 66. Central shaft 66 includes an inner annular shoulder 72, and a coil spring 74 mounted on central shaft 66 between shoulder 72 and annular ring 62 urges or biases annular ring 62 toward the stop or return spring 70.

As mentioned above, thermal motor or actuator 64 has a piston 76 that is attached or press fitted into an axial recess 78 (see Figure 9) formed in a removable closure 80 which is part of or closes housing 46. Closure 80 has an O-ring seal 82 and is held in position by a suitable pin or set screw or other type of fastener, such as a "C"-clip or snap ring (not shown). As will be described in more detail below, when thermal motor 64 reaches a predetermined temperature, it extends axially. Since piston 76 is fixed in position, central shaft 66, which is part of thermal motor 64, moves downwardly through valve port 54 compressing return spring 70 and closing valve port 54. When the temperature inside chamber 48 drops below the predetermined temperature, thermal motor 64 retracts and return spring 70 urges central shaft 66 upwardly until return spring 70 engages annular ring 62 and lifts it off valve seat 60 again opening valve port 54. When valve port 54 is opened as indicated in Figure 3, return spring 70 extends through valve port 54 and into chamber 48, but it does not materially affect the flow through valve port 54.

As will be apparent from Figure 9, closure 80, thermal motor 64, coil spring 74, annular ring 62 and return spring 70 form a cartridge or subassembly 84 for by-pass valve 14. When subassembly 84 is removed from by-pass valve 14, the various conduits can be attached, such as by brazing to housing 46 without damaging thermal motor 64 or springs 70, 74. Cartridge 84 is then installed in housing 46 with closure 80 located opposite to valve port 54 and heat exchange circuit 10 is then ready for use.

The operation of by-pass valve 14 will now be described with reference to Figures 1, 3 and 4. Heat exchange circuit 10 can be operated with either conduit 34 or conduit 36 being the inlet conduit, the other one being the outlet conduit. Where conduit 34 is the inlet conduit, or in other words, receives hot transmission oil from the transmission, this is sometimes conveniently referred to as normal flow. In this case, conduit 36 is the outlet conduit and returns the transmission oil to the transmission after it has been cooled by heat exchanger 12.

Where conduit 36 is the inlet conduit receiving the hot transmission fluid or oil from the transmission and conduit 34 is the outlet or return conduit for delivering the cooled oil back to the transmission, this configuration is sometimes conveniently referred to as reverse flow.

Dealing first with the normal flow configuration, if the transmission oil and heat exchange circuit 10 have been warmed up to operating temperatures, by-pass valve 14 appears as in Figure 4. Hot engine oil enters into inlet conduit 34, passes in series through main port 52, chamber 48 and main port 50 to heat exchanger inlet conduit 32. The hot fluid passes through heat exchanger 12 and returns through outlet conduit 28, passes through branch ports 56, 58 and out through outlet conduit 36 to return to the transmission. In this case, there is no by-pass flow, because valve port 54 is closed. If the fluid returning to the transmission through conduits 28, 36 drops below about 80 degrees C., actuator 64 retracts causing valve member 62 to lift off valve seat 60 opening valve port 54. This creates a by-pass flow from conduit 34 through chamber 48 and through valve port 54 to join the flow in conduit 36 returning to the transmission. If the temperature of the flow or oil is very cold, such as at engine start-up conditions, the oil may be so viscous that virtually no flow goes through heat exchanger 12 and the flow is totally by-passed from inlet conduit 34 to outlet conduit 36. As the oil starts to warm up, however, flow through conduit 32 and heat exchanger 12 starts to increase, and by the time the oil reaches the desired operating temperature, full flow is occurring through heat exchanger 12 and valve member 62 closes valve port 54 discontinuing the by-pass flow. It will be appreciated that when by-pass valve 14, or at least valve member 62, is open, valve port 54 becomes an outlet port. The other main ports 52 and 50 become respective inlet and outlet ports in this regular flow configuration.

In the regular flow configuration, one of the branch ports, namely branch port 56 becomes an inlet port, the other branch port 58 thus becomes an outlet port communicating with inlet port 56. Valve port 54 becomes an outlet port for by-pass valve 14, and the other main ports 52 and 50 become respective inlet and outlet ports for by-pass valve 14.

In the reverse flow configuration, conduit 36 becomes the inlet conduit receiving hot oil from the transmission, and conduit 34 becomes the outlet conduit returning the cooled transmission oil to the transmission. In this configuration, if the transmission and heat exchange circuit 10 are at operating temperatures, the hot transmission fluid passes through branch port 58, which becomes an inlet port. Valve member 62 is closed so there is no by-pass flow. The hot oil then continues on through branch port 56 which becomes an outlet port communicating with inlet branch port 58. The hot oil goes through conduit 28 and the heat exchanger 12 and returns through conduit 32 to pass in series through second main port 50, chamber 48 and third main port 52 and out through conduit 34 to be returned to the transmission.

If the transmission oil returning to the transmission drops below the predetermined temperature, actuator 64 causes valve member 62 to open creating by-pass flow from valve port 54 to main port 52 and conduit 34. Again, if the oil is extremely cold, such as at engine start-up conditions, very little, if any, flow passes through heat exchanger 12 and there is almost total by-pass through by-pass valve 14. As the transmission oil starts to warm up, some flow starts to go through heat exchanger 12 and returns through conduit 32 to chamber 48 and back to the transmission through conduit 34. This causes actuator 64 to warm up faster than would otherwise be the case. As the transmission oil returning to the transmission through outlet conduit 34 reaches the predetermined temperature, actuator 64 extends closing valve member 62 and stopping the by-pass flow. In this configuration, any pressure peaks that might occur upon the closing of valve member 62 are attenuated or modulated, because valve member 62 can lift off valve seat 60 by such a pressure surge, since valve member 62 is urged into position by coil spring 74 and not solidly in engagement with valve seat 60. In other words, coil spring 74 can absorb pressure spikes in inlet conduits 36, 28, so that they do not travel back and adversely affect the transmission. The circuiting of the valve is such that the housing functions as a mixing chamber, in which the by-pass fluid stream and the heat exchanger outlet stream can mix in direct contact with the thermal actuator, so that thermal transients are damped, and the actuator is able to directly respond to the mixed oil temperature being returned to the transmission. Also during the transition between opening and closing, the hot by-pass stream and cooler oil cooler return stream are mixed (as controlled by the directing contacting actuator 64) to dampen any temperature transients in the oil being returned to the transmission.

In the reverse flow configuration, valve port 54 becomes an inlet port for by-pass valve 14 and the other main ports 50, 52 become respective inlet and outlet ports for by-pass valve 14.

Another advantage of by-pass valve 14 is that because actuator 64 is located in chamber 48 with oil continuously flowing therethrough, actuator 64 warms up and cools off quickly. Also, if the transmission oil becomes over-heated or experiences a temperature spike, actuator 64 is not damaged, because it is always exposed to some return flow from heat exchanger 12 in chamber 48 in the reverse flow configuration, or in branch ports 56, 58 in the regular flow configuration.

As mentioned above, by-pass valve 14 has three main ports. If valve port 54 is considered to be the first main port, conduits 28, 36 can be considered to be a first flow conduit communicating with valve port 54 and one of the inlet and outlet openings of heat exchanger 12, depending upon whether by-pass valve 14 is operated in the regular flow or reverse flow configuration. Depending upon whether valve port 54 is connected to the inlet or the outlet of heat exchanger 12, a second main port, namely main port 50, is connected to the other of the inlet and outlet openings of heat exchanger 12. A second flow conduit, namely conduit 34, communicates with the third main port, namely main port 52 of by-pass valve 14. As thus described, in the reverse flow configuration, the first flow conduit 28, 36 is the heat exchanger inlet. The second conduit 34 through conduit 32 becomes the heat exchanger outlet. In the regular flow configuration, the first flow conduit 28, 36 becomes the heat exchanger outlet, and the second flow conduit 34 through conduit 32 becomes the heat exchanger inlet.

Referring next to Figures 5, 6, 7 and 8, another preferred embodiment of a by-pass valve 86 is shown which is similar to by-pass valve 14, but makes provision for totally blocking the flow to heat exchanger 12 in the by-pass open configuration. In by-pass valve 86, removable closure 88 has a plurality of side ports 90, one of these side ports communicating with main port 50. Closure 88 also has an axial port 92 communicating with side ports 90. Axial port 92 has a peripheral valve seat 94, and thermal motor 64 has a second annular shoulder 96 that forms a second valve member that is adapted to engage the peripheral valve seat of axial port 92 and thus block the flow to or from main port 50 when valve member 62 is in the open position as indicated in Figure 5. It will be noted that in this embodiment, main port 52 is located slightly lower than in by-pass valve 14 in order to accommodate the longer removable closure 88. Otherwise, the construction and operation of by-pass valve 86 is substantially the same as in the case of by-pass valve 14. By-pass valve 86 is particularly useful where a large heat exchanger 12 is used having a relatively low internal flow resistance in cold flow conditions. In this case, it is better to block the flow to heat exchanger 12 using the upper valve element consisting of shoulder 96 and valve seat 94, or too much cold oil may be returned to the transmission causing it to take too long to warm up.

Figure 10 shows a subassembly or cartridge 98 for by-pass valve 86. It will be noted that cartridge 98 is similar to cartridge 84 of Figure 9, except for the longer removable closure 88.

Referring next to Figures 2, 11 and 12, three port by-pass valve 44 will now be described in further detail. By-pass valve 44 is similar to by-pass valve 14, except that by-pass valve 44 has an enlarged main or valve port 100, and a single conduit 45 communicates with valve port 100. As seen in Figure 2, conduit 45 is connected to conduits 28 and 36. In the reverse flow configuration, conduit 36 is the inlet to heat exchanger 12 and receives hot oil from the transmission. This oil flows upwardly through conduit 45 and through valve port 100 when the by-pass valve element 62 is open. The by-pass flow then travels through chamber 48 to main port 52 and conduit 34. When valve member 62 is closed, so that there is no by-pass flow, oil coming from the transmission through conduit 36 flows into conduit 28 and through heat exchanger 12 to be returned to the transmission through conduits 32, 34 as in the case of by-pass valve 14. In the regular flow configuration, oil from the transmission flows through conduit 34, chamber 48 and conduit 32 into heat exchanger 12. Oil from the heat exchanger passes out through outlet conduit 28, and if valve element 62 is closed so that there is no by-pass flow, the oil flows through conduit 36 and back to the transmission. If valve element 62 is open, so there is by-pass flow, oil from conduit 34 passes through valve port 100 and back to the transmission through conduit 36.

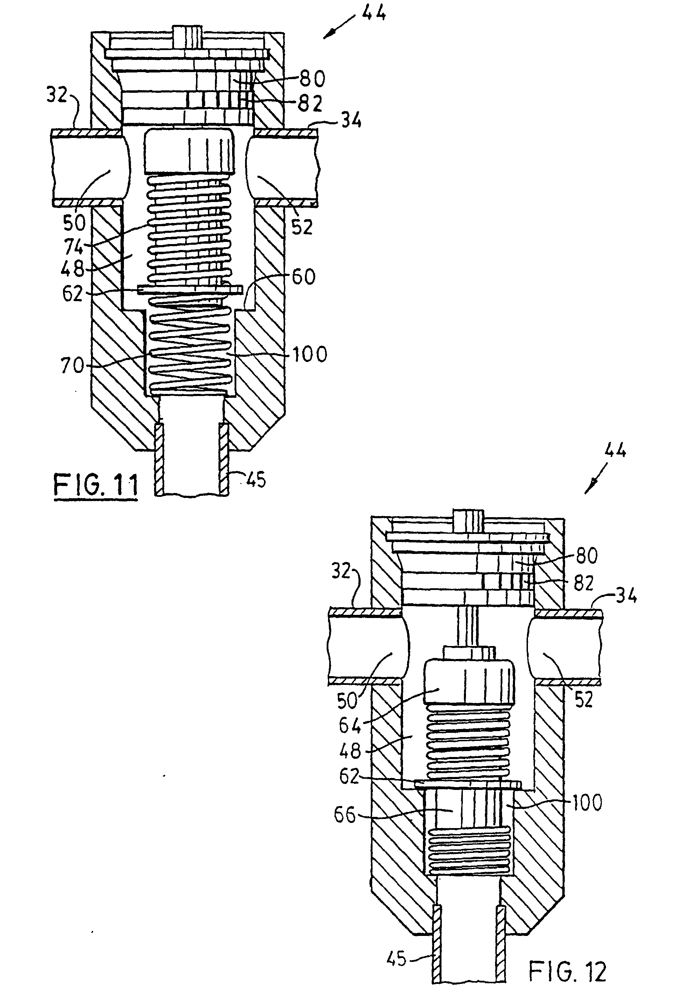

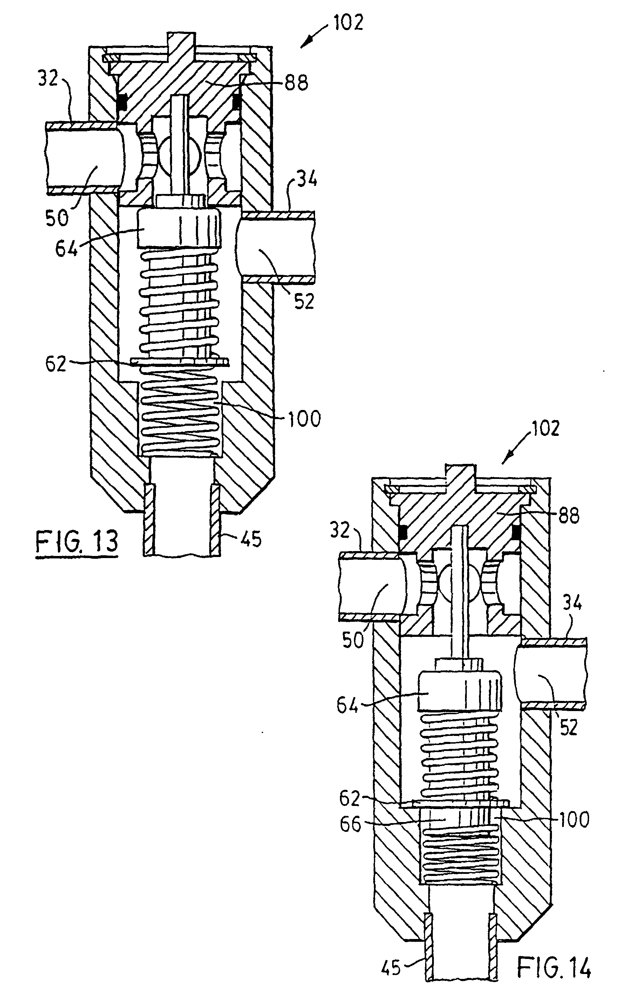

Figures 13 and 14 show a three port by-pass valve 102 that has the single conduit 45 communicating with valve port 100 as in the case of by-pass valve 44 of Figures 11 and 12. By-pass valve 102 also has the ported removable closure 88 as in the case of by-pass valve 86 of Figures 5 and 6 to provide the flow blockage to the heat exchanger when the by-pass valve member 62 is open.

Having described preferred embodiments of the invention, it will be appreciated that various modifications can be made to the structures described above. Firstly, although by-pass valves 14, 44, 86 and 102 have been described as being discrete or separate items from heat exchanger 12 and the various conduits communicating with the by-pass valves, the by-pass valves could be integrated into the inlet and outlet manifolds 16, 20, or they could be joined directly to the inlet and outlet manifolds 16, 20 instead of using conduits 28, 32. In this case, if the valve port is the first main port and it is connected to one of the inlet and outlet openings 26, 30, the second main port 50, the chamber 48 and the third main port 52 could be connected in series directly to the other of the inlet and outlet openings 26, 30. More specifically, if the valve port 54 is connected to the heat exchanger inlet opening 26, either directly or through a conduit, the second main port 50, chamber 48 and third main port 52 could be connected in series directly or through a conduit to outlet opening 30, the third main port 52 then becoming the heat exchanger outlet returning the oil to the transmission. Similarly, if the valve port 54 is connected to heat exchanger outlet opening 30 either directly or through a conduit, the second main port 50, chamber 48 and third main port 52 could be connected in series directly or through a conduit to heat exchanger inlet opening 26, the third main port 52 then becoming the heat exchanger inlet receiving the hot oil from the transmission.

The by-pass valves have been described above for use with an automotive transmission oil cooler as the heat exchanger, but the by-pass valves could be used with any other types of heat exchanger, such as fuel cooling heat exchangers, and in non-automotive applications as well. Other types of thermal actuators can be used than the wax-type actuator 64. For instances, bimetallic or shape memory alloy thermal responsive actuators could be used to move valve member 62 and also give heat exchanger blockage as in by-pass valves 86 and 102. Further modifications to the structures described will be apparent to those skilled in the art.

As will be apparent to those skilled in the art in the light of the foregoing disclosure, many alterations and modifications are possible in the practice of this invention. Accordingly, the scope of the invention is to be construed in accordance with the substance defined by the following claims.

## Claims

1. A by-pass valve for a heat exchange circuit having a housing (46) defining a chamber (48) therein and first, second and third main ports communicating with the chamber, the first main port (54) being a by-pass valve port, the valve port (54) having a central axis and a peripheral valve seat (60); a temperature responsive actuator (64) located in the chamber and having a reciprocating central shaft (66) disposed along said central axis, the central shaft (66) having a closed end portion (68) for partially closing the valve port (54) and an annular ring (62) slidably mounted on the central shaft (66) adjacent to the closed end portion (68) and extending transversely from the shaft (66) to engage the valve seat (60) and completely close the valve port; the closed end portion (68) inlcuding a stop (70) for preventing the annular ring from sliding off the central shaft; and bias means (74) for urging the annular ring toward the stop; **characterized by** a return spring (70) mounted in the housing below the annular ring (62) and being connected to the central shaft (66) to urge the central shaft end portion (68) to retract and open the valve port (54).

2. A by-pass valve as claimed in claim 1 wherein the central shaft (66) includes an inner annular shoulder (72), and wherein the bias means (74) is a coil spring mounted on the shaft (66) between the inner shoulder (72) and the annular ring (62).

3. A by-pass valve as claimed in claim 2 wherein the actuator (64) is a thermal motor adapted to extend axially upon being heated to a predetermined temperature and retract upon being cooled below said temperature, and wherein the central shaft (66) is part of the thermal motor.

4. A by-pass valve as claimed in claim 3 wherein the return spring (70) is connected located in the valve port (54).

5. A by-pass valve as claimed in claim 4 wherein the return spring (70) forms said stop.

6. A by-pass valve as claimed in claim 3, 4, or 5 wherein the housing (46) includes a removable closure (80,88) located opposite to the valve port (54), the thermal motor (64) having a piston (76) connected to said closure, the closure (80), thermal motor (64), coil spring (74), annular ring (62) and return spring (70) forming a subassembly (84) for the by-pass valve.

7. A by-pass valve as claimed in claim 2 or 3 wherein the valve port (54) is an outlet port, the other main ports (50,52) being respective inlet and outlet ports.

8. A by-pass valve as claimed in claim 2 or 3 wherein the valve port (54) is an inlet port, the other main ports (50,52) being respective inlet and outlet ports.

9. A by-pass valve as claimed in claim 2 or 3 wherein the housing (46) further includes first and second branch ports (56,58) communicating with the valve port (54).

10. A by-pass valve as claimed in claim 9 wherein one of said branch ports (56,58) is an inlet port, the other branch port being an outlet port communicating therewith, wherein the valve port (54) is an inlet port for the by-pass valve and the other main ports being respective inlet and outlet ports for the by-pass valve.

11. A by-pass valve as claimed in claim 9 wherein one of said branch ports (56,58) is an inlet port, the other branch port being an outlet port communicating therewith, wherein the valve port (54) is an outlet port for the by-pass valve, and the other main ports being respective inlet and outlet ports for the by-pass valve.

12. A by-pass valve as claimed in claim 3 wherein the housing (46) includes a removable closure (80,88) located opposite to the valve port (54), the thermal motor having a piston (76) connected to said closure.

13. A by-pass valve as claimed in claim 12 wherein the removable closure (80,88) has a side port (90) and an axial port (92) communicating therewith, the side port being located to communicate with one of the main ports, and the axial port having a peripheral valve seat (94), the thermal motor (64) having a second annular shoulder (96) forming a second valve member adapted to engage the axial port valve seat and thus blocks said one main port.

14. A heat exchanger having an inlet manifold (16) with an inlet opening (26) and an outlet manifold (20) with an outlet opening (30); a plurality of spaced-apart heat exchange conduits (22,24) connected between the inlet and outlet manifolds; a by-pass valve (14,44) as claimed in any preceding claim; means for connecting the valve port to one of the inlet and outlet openings; means for connecting the second main port, the chamber (48) and the third main port in series with the other of the inlet and outlet openings.

15. A heat exchanger as claimed in claim 14 wherein the valve port (54) is connected to communicate with the heat.

16. A heat exchanger as claimed in claim 14 wherein the valve port (54) is connected to communicate with the heat exchanger outlet opening (30) and the second main port (50), the chamber (48) and the third main port (52) are connected in series with the heat exchanger inlet opening (26), the third main port becoming the heat exchanger inlet.

17. A heat exchanger as claimed in claim 14, 15 or 16 wherein the means for connecting the valve port (54) and second main port (50) to the inlet and outlet openings (26,30) are conduits (28,30).

18. A heat exchanger as claimed in claim 14, 15 or 16 wherein the means for connecting the valve port (54) and second main port (50) to the inlet and outlet openings (26,30) are direct connections between said ports and openings.

## Patentansprüche

1. Bypassventil für einen Wärmetauscherschaltkreis mit einem Gehäuse (46), welches in diesem eine Kammer (48) und erste, zweite und dritte Hauptanschlüsse bildet, die mit der Kammer in Verbindung stehen, wobei der erste Hauptanschluss (54) ein Bypassventilanschluss ist und der Ventilanschluss (54) aufweist: eine Mittelachse und einen Ventilumfangssitz (60); ein auf die Temperatur reagierendes Stellglied (64), welches in der Kammer angeordnet ist und eine sich hin und her bewegende Zentralwelle (66) besitzt, die entlang der Zentralachse angeordnet ist, die Zentralwelle (66) einen geschlossenen Endabschnitt (68) zum teilweisen Schließen des Ventilanschlusses (54) und einen kreisförmigen Ring (62) besitzt, der verschiebbar an der Zentralwelle (66) neben dem geschlossenen Endabschnitt (68) montiert ist und sich von der Welle (66) quer erstreckt, um in den Ventilsitz (60) einzugreifen und den Ventilanschluss vollständig zu schließen; der geschlossene Endabschnitt (68) einen Anschlag (70) aufweist, um. zu verhindern, dass der kreisförmige Ring von der Zentralwelle rutscht; und eine Vorspann-Einrichtung (74) zum Drücken des kreisförmigen Rings gegen den Anschlag; **dadurch gekennzeichnet, dass** eine in dem Gehäuse unter dem kreisförmigen Ring (62) montierte und mit der Zentralwelle (66) verbundene Rückhaltefeder (70) den Zentralwellen-Endabschnitt (68) antreibt, den Ventilanschluss (54) zurückzuziehen und zu öffnen.

2. Bypassventil nach Anspruch 1, bei welchem die Zentralwelle (66) eine ringförmige Innenflanke (72) aufweist, und bei welchem die Vorspann-Einrichtung (74) eine Spiralfeder ist, welche an der Welle (66) zwischen der Innenflanke (72) und dem kreisförmigen Ring (62) befestigt ist.

3. Bypassventil nach Anspruch 2, bei welchem das Stellglied (64) ein thermischer Motor ist, der dafür eingerichtet ist, sich axial auszudehnen, wenn er auf eine vorgegebene Temperatur erhitzt wird, und sich zusammenzuziehen, wenn er unter diese Temperatur abgekühlt wird, und bei welchem die Zentralwelle (66) ein Teil des thermischen Motors ist.

4. Bypassventil nach Anspruch 3, bei welchem die Rückhaltefeder (70) in Verbindung mit dem Ventilanschluss (54) angeordnet ist.

5. Bypassventil nach Anspruch 4, bei welchem die Rückhaltefeder (70) den Anschlag bildet.

6. Bypassventil nach Anspruch 3, 4 oder 5, bei welchem das Gehäuse (46) einen abnehmbaren Verschluss (80, 88) aufweist, der gegenüber dem Ventilanschluss (54) angeordnet ist, der thermische Motor (64) einen Kolben (76) besitzt, der mit dem Verschluss verbunden ist, der Verschluss (80), der thermische Motor (64), die Spiralfeder (74), der kreisförmige Ring (62) und die Rückhaltefeder (70) eine Baugruppe (84) für das Bypassventil bilden.

7. Bypassventil nach Anspruch 2 oder 3, bei welchem der Ventilanschluss (54) ein Auslassanschluss ist und die anderen Hauptanschlüsse (50, 52) jeweils Einlass- und Auslassanschlüsse sind.

8. Bypassventil nach Anspruch 2 oder 3, bei welchem der Ventilanschluss (54) ein Einlassanschluss und die anderen Hauptanschlüsse (50, 52) jeweils Einlass- und Auslassanschlüsse sind.

9. Bypassventil nach Anspruch 2 oder 3, bei welchem das Gehäuse (46) ferner erste und zweite Verzweigungsanschlüsse (56, 58) aufweisen, welche mit dem Ventilanschluss (54) in Verbindung stehen.

10. Bypassventil nach Anspruch 9, bei welchem einer der Verzweigungsanschlüsse (56, 58) ein Einlassanschluss ist, der andere Verzweigungsanschluss ein Auslassanschluss ist, welcher mit diesem in Verbindung steht, wobei der Ventilanschluss (54) ein Einlassanschluss für das Bypassventil ist und die anderen Hauptanschlüsse jeweils Einlass- und Auslassanschlüsse für das Bypassventil sind.

11. Bypassventil nach Anspruch 9, bei welchem einer der Verzweigungsanschlüsse (56, 58) ein Einlassanschluss ist, der andere Verzweigungsanschluss ein Auslassanschluss ist, welcher mit diesem in Verbindung steht, wobei der Ventilanschluss (54) ein Auslassanschluss für das Bypassventil ist und die anderen Hauptanschlüsse jeweils Einlass- und Auslassanschlüsse für das Bypassventil sind.

12. Bypassventil nach Anspruch 3, bei welchem das Gehäuse (46) einen abnehmbaren Verschluss (80, 88) aufweist, welcher gegenüber dem Ventilanschluss (54) angeordnet ist, und der thermische Motor einen Kolben (76) besitzt, welcher mit dem Verschluss verbunden ist.

13. Bypassventil nach Anspruch 12, bei welchem der abnehmbare Verschluss (80, 88) einen Seitenanschluss (90) und einen axialen Anschluss (92 ) besitzt, welcher mit diesem in Verbindung steht, der Seitenanschluss so angeordnet ist, dass er mit einem der Hauptanschlüsse kommuniziert, und der axiale Anschluss einen Ventilumfangssitz (94) besitzt, der thermische Motor (64) eine zweite ringförmige Flanke (96) besitzt, welche ein zweites Ventilelement bildet, welches dafür eingerichtet ist, in den axialen Ventilanschlusssitz einzugreifen und somit den einen Hauptanschluss zu blockieren.

14. Wärmetauscher mit einem Einlassrohr (16), das eine Einlassöffnung (26) aufweist, und einem Auslassrohr (20), das eine Auslassöffnung (30) aufweist; einer Mehrzahl von Wärmetauscherschaltkreisen (22, 24), die mit Abstand zueinander angeordnet sind, welche zwischen den Einlass- und Auslassrohren angeschlossen sind; einem Bypassventil (14, 44) nach einem der vorhergehenden Ansprüche; einer Einrichtung zum Verbinden des Ventilanschlusses mit einer der Einlass- und Auslassöffnungen; einer Einrichtung zum Anschließen des zweiten Hauptanschlusses, der Kammer (48) und des dritten Hauptanschlusses in Reihe an die übrigen der Einlass- und Auslassöffnungen.

15. Wärmetauscher nach Anspruch 14, bei welchem der Ventilanschluss (54) so angeschlossen ist, dass er mit der Wärmetauschereinlassöffnung und dem Wärmetauscherausgang in Verbindung steht.

16. Wärmetauscher nach Anspruch 14, bei welchem der Ventilanschluss (54) so angeschlossen ist, dass er mit der Wärmetauscher-Auslassöffnung (30) und dem zweiten Hauptanschluss (50) in Verbindung steht, die Kammer (48) und der dritte Hauptanschluss (52) an die Wärmetauscher-Einlassöffnung (26) in Reihe angeschlossen sind und der dritte Hauptanschluss zu dem Wärmetauschereingang wird.

17. Wärmetauscher nach Anspruch 14, 15 oder 16, bei welchem die Einrichtung zum Anschließen des Ventilanschlusses (54) und des zweiten Hauptanschlusses (50) an die Einlass- und Auslassöffnungen (26, 30) Rohrleitungen (28, 30) sind.

18. Wärmetauscher nach Anspruch 14, 15 oder 16, bei welchem die Einrichtung zum Anschließen des Ventilanschlusses (54) und des zweiten Hauptanschlusses (50) an die Einlass- und Auslassöffnungen (26, 30) Direktverbindungen zwischen den Anschlüssen und den Öffnungen sind.

## Revendications

1. Vanne de dérivation pour un circuit échangeur de chaleur comportant un boîtier (46) formant une chambre (48) munie d'un premier, d'un second et d'un troisième orifice principaux communiquant avec la chambre, le premier orifice principal (54) étant un orifice de vanne de dérivation, l'orifice de vanne (54) ayant un axe central et un siège de vanne périphérique (60), un actionneur (64) sensible à la température, placé dans la chambre, et ayant une tige centrale (66) à mouvement alternatif, placée suivant cet axe central, la tige centrale (66) ayant une partie d'extrémité fermée (68) pour fermer partiellement l'orifice de vanne (54) et un anneau (62) monté coulissant sur la tige centrale (66) au voisinage de la partie d'extrémité fermée (68) et traversant transversalement la tige (66) pour coopérer avec le siège de vanne (60) et fermer complètement l'orifice de vanne, la partie d'extrémité fermée (68) comportant une butée (70) pour éviter que l'anneau ne se dégage en glissant de la tige centrale, et un moyen de poussée (74) pour pousser l'anneau contre la butée, **caractérisée par** un ressort de rappel (70) monté dans le boîtier, sous l'anneau (62), et relié à la tige centrale (66) pour pousser la partie d'extrémité de tige centrale (68) et se rétracter pour ouvrir l'orifice de vanne (54).

2. Vanne de dérivation selon la revendication 1, dans laquelle la tige centrale (66) comporte un épaulement annulaire intérieur (72) et le moyen de poussée (74) est un ressort hélicoïdal enfilé sur la tige (66) entre l'épaulement intérieur (72) et l'anneau (62).

3. Vanne de dérivation selon la revendication 2, dans laquelle l'actionneur (64) est un moteur thermique destiné à se déployer axialement lorsqu'il est chauffé à une température prédéterminée, et à se rétracter lorsqu'il est refroidi en dessous de cette température, la tige centrale (66) faisant partie du moteur thermique.

4. Vanne de dérivation selon la revendication 3, dans laquelle le ressort de rappel (70) est monté de manière reliée à l'orifice de vanne (54).

5. Vanne de dérivation selon la revendication 4, dans laquelle le ressort de rappel (70) forme une butée.

6. Vanne de dérivation selon les revendications 3, 4 ou 5, dans laquelle le boîtier (46) comporte un moyen de fermeture amovible (80, 88) placé en regard de l'orifice de vanne (54), le moteur thermique (64) ayant un piston (76) relié au moyen de fermeture, ce moyen de fermeture (80), le moteur thermique (64), le ressort hélicoïdal (74), l'anneau (62) et le ressort de rappel (70) formant un sous-ensemble (84) pour la vanne de dérivation.

7. Vanne de dérivation selon la revendication 2 ou 3, dans laquelle l'orifice de vanne (54) est un orifice de sortie, les autres orifices principaux (50, 52) étant respectivement l'orifice d'entrée et l'orifice de sortie.

8. Vanne de dérivation selon la revendication 2 ou 3, dans laquelle l'orifice de vanne (54) est un orifice d'entrée, les autres orifices principaux (50, 52) étant respectivement les orifices d'entrée et de sortie.

9. Vanne de dérivation selon l'une quelconque des revendications 2 ou 3, dans laquelle le boîtier (46) comporte en outre un premier et un second orifice d'embranchement (56, 58) communiquant avec l'orifice de vanne (54).

10. Vanne de dérivation selon la revendication 9, dans laquelle l'un des orifices d'embranchement (56, 58) est un orifice d'entrée et l'autre orifice d'embranchement est un orifice de sortie communiquant avec celui-ci, l'orifice de vanne (54) étant un orifice d'entrée pour la vanne de dérivation et les autres orifices principaux étant respectivement un orifice d'entrée et un orifice de sortie de la vanne de dérivation.

11. Vanne de dérivation selon la revendication 9, dans laquelle l'un des orifices d'embranchement (56, 58) est un orifice d'entrée, l'autre orifice d'embranchement étant un orifice de sortie communiquant avec celui-ci, l'orifice de vanne (54) étant un orifice de sortie pour la vanne de dérivation et les autres orifices principaux étant respectivement des orifices d'entrée et de sortie de la vanne de dérivation.

12. Vanne de dérivation selon la revendication 3, dans laquelle le boîtier (46) comporte un moyen de fermeture amovible (80, 88) placé à l'opposé de l'orifice de vanne (54), le moteur thermique ayant un piston (76) relié au moyen de fermeture.

13. Vanne de dérivation selon la revendication 12, dans laquelle le moyen de fermeture amovible (80, 88) comporte un orifice latéral (90) et un orifice axial (92) communiquant avec celui-ci, l'orifice latéral étant placé de manière à communiquer avec l'un des orifices principaux et l'orifice axial ayant un siège de vanne périphérique (94), le moteur thermique (64) ayant un second épaulement annulaire (96) formant un second élément de vanne pour coopérer avec le siège de vanne de l'orifice axial et bloquer ainsi l'un des orifices principaux.

14. Echangeur de chaleur comportant un collecteur d'entrée (16) avec une ouverture d'entrée (26) et un collecteur de sortie (20) avec une ouverture de sortie (30), un ensemble de conduites d'échange de chaleur (22, 24) espacées, branché entre le collecteur d'entrée et le collecteur de sortie, une vanne de dérivation (14, 44) selon l'une quelconque des revendications précédentes, des moyens pour relier l'orifice de vanne à l'un des orifices d'entrée et de sortie, des moyens pour relier le second orifice principal, la chambre (48) et le troisième orifice principal, en série avec l'autre des orifices d'entrée et de sortie.

15. Echangeur de chaleur selon la revendication 14, dans lequel l'orifice de vanne (54) est branché de manière à communiquer avec l'orifice d'entrée de l'échangeur de chaleur (26) et la sortie de l'échangeur.

16. Echangeur de chaleur selon la revendication 14, dans lequel l'orifice de vanne (54) est relié de manière à communiquer avec l'orifice de sortie (30) de l'échangeur de chaleur et le second orifice principal (50), la chambre (48) et le troisième orifice principal (52) sont reliés en série avec l'orifice d'entrée (26) de l'échangeur de chaleur, le troisième orifice principal devenant l'entrée de l'échangeur de chaleur.

17. Echangeur de chaleur selon les revendications 14, 15 ou 16, dans lequel le moyen pour relier l'orifice de vanne (54) et le second orifice principal (50) aux orifices d'entrée et de sortie (26, 30) sont des conduites (28, 30).

18. Echangeur de chaleur selon les revendications 14, 15 ou 16, dans lequel le moyen pour relier l'orifice de vanne (54) et le second orifice principal (50) aux orifices d'entrée et de sortie (26, 30) sont des connexions directes entre les orifices et les ouvertures.
